# FASCICULE DE BREVET EUROPEEN

(11) **EP 2 058 150 B1**
(45) Date de publication et mention de la délivrance du brevet: **06.01.2010**
(21) Numéro de dépôt: 08105604.6
(22) Date de dépôt: 20.10.2008
(51) Int. Cl.: B60D 1/00, B62B 5/00

(54) **Plateforme à roulettes**
Plattform mit Rollen
Trolley platform

(30) Priorité: 08.11.2007 FR 0758871
(43) Date de publication de la demande: 13.05.2009
(73) Titulaire: Linpac Allibert Europe, 92000 Nanterre (FR)
(72) Inventeur: Chalutaud, Stéphane, 92000, Nanterre (FR)
(74) Mandataire: Schmit, Christian Norbert Marie

(56) Documents cités:
- EP-A- 0 807 563
- EP-A- 1 125 818
- ES-A1- 2 255 827
- GB-A- 2 313 103

## Description

La présente invention se rapporte à une plateforme roulante, dite aussi à roulettes. Une plateforme à roulettes est composée d'un plancher supporté par des roulettes, en général quatre roulettes. Lors d'utilisation de plateformes à roulettes, il arrive qu'un utilisateur ait à déplacer plusieurs plateformes en même temps. Il est alors nécessaire de pouvoir accrocher ensemble les plateformes.

Plusieurs solutions sont connues de l'homme du métier afin de permettre d'accrocher ensemble des plateformes. Ainsi le document GB-A-2 313 103, qui divulgue toutes les caractéristiques techniques du préambule de la revendication 1, présente une plateforme comportant un plancher supporté par un jeu de roulettes. Le plancher est de forme parallélépipédique. Un chant de ce plancher comporte un dispositif de jonction permettant d'accrocher ensemble deux palettes. Le dispositif de jonction présenté dans ce document comporte un moyen de connexion sous forme d'une barre cylindrique. La barre est insérée dans une gorge, ou rainure, réalisée dans le chant du plancher. Lorsque deux plateformes sont attachées, la barre est insérée dans la gorge des deux plateformes à la fois. Typiquement, la gorge d'une première plateforme dans laquelle est logée la barre se développe dans la continuité de la gorge de la deuxième plateforme lorsque les plateformes sont accrochées.

Afin de bloquer les deux plateformes ensemble, ou d'empêcher le coulissement de la barre dans la gorge, la barre comporte des ergots ou des plots qui s'enclenchent, par rotation de la barre, effectuée manuellement, dans des orifices réalisés dans la gorge. De tels orifices sont réalisés dans la gorge sensiblement dans une partie centrale du chant du plancher sur lequel est réalisée la gorge. Par ailleurs, de tels orifices sont réalisés dans la gorge aux extrémités du chant du plancher sur lequel est réalisée la gorge. L'enclenchement des ergots dans les orifices permet à la barre de prendre une position de repos, au centre, et autrement une position d'accrochage. Dans la position d'accrochage, les ergots d'une barre sont d'une part dans un orifice présent sur la première plateforme et d'autre part dans un orifice présent dans la deuxième plateforme. Le blocage de la barre à la fois sur la première plateforme et sur la deuxième plateforme solidarise les deux plateformes.

Cependant une telle solution présente plusieurs inconvénients. En effet, dans un tel dispositif, le moyen de connexion est généralement monté durant l'assemblage de la plateforme et ne peut pas être retirée ou remplacé. De plus, cette gorge est assez difficile de réalisation de par sa forme, un dispositif de fabrication d'une telle gorge étant complexe.

Par ailleurs, le moyen de connexion doit être manipulé de manière manuelle afin de l'enclencher dans des orifices du plancher. Cette obligation d'enclenchement manuel impose des manoeuvres à l'utilisateur qui, surtout quand elles sont répétées, sont peu pratiques et laborieuses. L'utilisateur doit se baisser pour déplacer le moyen de connexion, que ce soit longitudinalement ou pour enclencher les plots dans les orifices. Le glissement longitudinal est empêché par les frottements de la barre dans la gorge. L'utilisateur doit vérifier que les plots du moyen de connexion sont bien en vis-à-vis des orifices et faire pivoter le moyen de connexion une fois encore manuellement afin d'enclencher les plots dans les orifices. Il en est de même lorsque l'utilisateur veut désenclencher les plots des orifices, que ce soit pour sortir de la position de repos de moyen de connexion ou encore pour désolidariser deux plateformes attachées ensemble.

Pour résoudre ces problèmes, le moyen de connexion selon l'invention se déplace suivant une section de guidage, de réalisation et de mise en place simplifiées. Par ailleurs, l'invention prévoit de créer un moyen de connexion avec une mise en place automatique, évitant ainsi les problèmes d'enclenchement manuel.

Pour cela la plateforme selon l'invention comporte une palette ou un plancher de forme parallélépipédique. La plateforme roulante peut servir de support à un ou plusieurs bacs. La forme du plancher de la plateforme roulante permet de les accoler deux à deux. Deux plateformes roulantes peuvent être retenues ensemble à l'aide d'une barre d'accrochage. Une telle barre est montée coulissante dans un chant latéral de la plateforme roulante. La barre possède deux positions fixes, et coulisse entre ces deux positions.

La barre possède ainsi une position d'accrochage dans laquelle un moyen de connexion de la barre sert à retenir ensemble un plancher de forme parallélépipédique à un autre plancher de forme parallélépipédique d'une autre plateforme roulante mise en vis-à-vis. Dans cette position d'accrochage, les deux plateformes roulantes mises en vis-à-vis sont jointes.

La barre possède aussi une position de repos dans laquelle le moyen de connexion maintient la barre en position de repos. Typiquement cette position de repos correspond à une position dans laquelle la barre est fixe sur le plancher sans maintenir la plateforme roulante jointe à une autre plateforme roulante.

Selon l'invention, le moyen de connexion est mobile en basculement par rapport à la barre. Dans une première position, le moyen de connexion maintient deux planchers ensemble et empêche la barre de coulisser.

L'invention a donc pour objet une plateforme roulante comportant un plancher de forme parallélépipédique, un jeu de roulettes supportant le plancher, un mécanisme de connexion, le mécanisme comportant une barre d'accrochage, coulissante dans un chant latéral du plancher entre deux positions, une première position d'accrochage dans laquelle un moyen de connexion du mécanisme sert à retenir ensemble le plancher à un plancher d'une autre plateforme roulante mise en vis-à-vis, et joindre ainsi les deux plateformes roulantes, et une deuxième position de moyen de connexion dit position de repos dans laquelle le moyen de connexion maintient le mécanisme en position de repos et ne retenant pas les deux planchers entre eux caractérisée en ce que le moyen de connexion est mobile en basculement par rapport à la barre, entre deux positions, une première position dans laquelle le moyen de connexion peut retenir les planchers ensemble et une deuxième position dans laquelle il ne peut pas retenir les planchers ensemble.

Un mode de réalisation préférentiel de l'invention prévoit que le moyen de connexion comporte deux pions, le chant du plancher sur lequel coulisse la barre comportant une première encoche pour recevoir un premier pion du moyen de connexion, pour la première position de ce moyen de connexion, un chant du plancher, opposé au chant sur lequel coulisse la barre, comportant une deuxième encoche pour recevoir un deuxième pion d'un moyen de connexion d'un autre plancher identique, pour la première position de ce moyen de connexion de l'autre plancher.

Un mode de réalisation préférentiel de l'invention prévoit qu'un chant du plancher sur lequel coulisse la barre comporte une cavité ou un jeu d'encoches ou de trous pour recevoir les deux pions du moyen de connexion pour la deuxième position du moyen de connexion. Il est possible toutefois que dans une version simplifiée, dans la position de repos, aucune cavité ou encoche ne vienne retenir la barre 6 contre une butée.

Un mode de réalisation préférentiel de l'invention prévoit que les chants du plancher comportent chacun une nervure de coulissement, la première et la deuxième encoche sont allongées perpendiculairement à la direction de coulissement de la barre, une des deux encoches débouchant sur le sommet de la nervure présente dans un chant alors que l'autre encoche débouche dans la base d'un rail présent dans l'autre chant. En variante, elles débouchent toutes les deux en haut et en bas.

Un mode de réalisation préférentiel de l'invention prévoit que le moyen de connexion est maintenu dans la première ou la deuxième position par un moyen de rappel élastique.

Un mode de réalisation préférentiel de l'invention prévoit que le moyen de rappel élastique comporte un arbre porté par la barre, ou respectivement par le moyen de connexion, et un alésage recevant l'arbre et porté par le moyen de connexion, ou respectivement par la barre, et un ressort prenant appui entre la barre et le moyen de connexion. De préférence le ressort est formé par une patte flexible et le moyen de connexion et le ressort sont formés en un même matériau, en une pièce monobloc. De préférence, un axe de l'arbre est perpendiculaire au chant de la palette.

Un mode de réalisation préférentiel de l'invention prévoit que la barre comporte un profil en U, de section rectangulaire ouverte, avec une base reliant entre eux deux voiles ou deux ailes, les deux ailes étant munies à leur extrémité libre chacune d'une nervure pour s'agripper, par exemple de manière élastique, dans des gorges ménagées dans une nervure du chant du plancher. Le profil de la barre comporte de préférence une base permettant l'appui du ressort.

Un mode de réalisation préférentiel de l'invention prévoit que le moyen de connexion est monté en rotation sur la barre, suivant un axe de rotation parallèle à l'axe de guidage, ou de coulissement.

Un mode de réalisation préférentiel de l'invention prévoit que le chant du plancher comporte une butée limitant le déplacement latéral de la barre

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : Une vue en perspective schématique éclatée partielle d'une plateforme à roulettes selon un premier mode de réalisation;
- Figure 2 : Une vue de dessus d'une plateforme à roulettes selon le premier mode de réalisation de l'invention;
- Figure 3: Une vue en perspective schématique d'une plateforme à roulettes selon un deuxième mode de réalisation de l'invention.

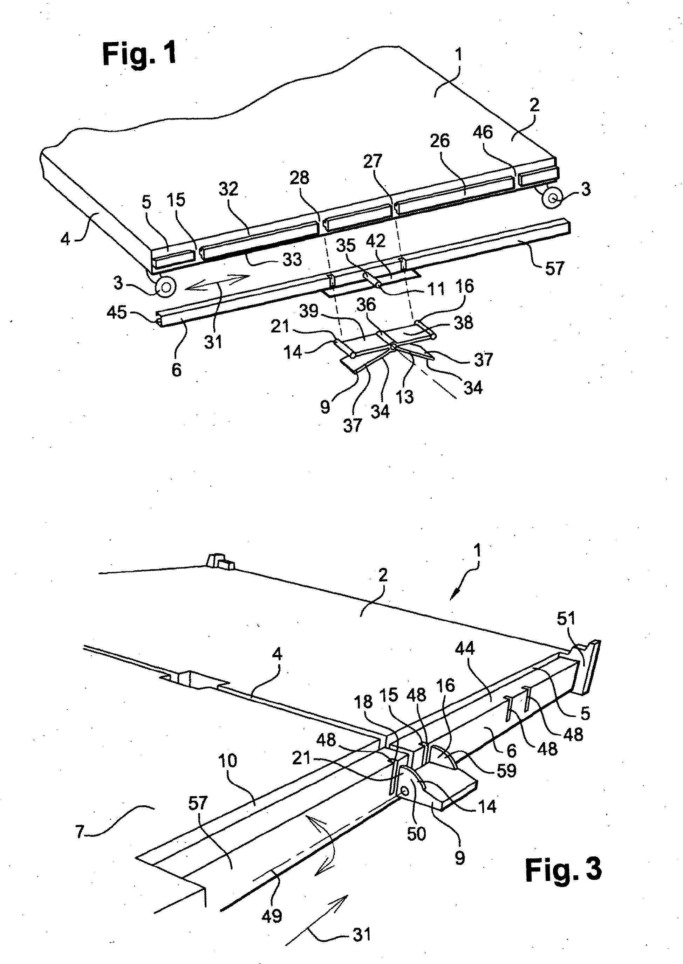

Figure 1, il est connu des plateformes roulantes 1 afin de transporter notamment divers bacs. De telles plateformes 1 peuvent être soit réalisées indépendamment du bac, soit de manière solidaire du bac. La base d'une telle plateforme 1 est réalisée par un plancher 2. Le plancher 2 a une forme parallélépipédique. Afin de permettre à un utilisateur d'un tel plancher de pouvoir déplacer facilement ce type de plateforme roulante 1, la plateforme roulante 1 comporte un jeu de roulettes 3. Chaque roulette comporte une roue montée pivotante par l'intermédiaire d'une monture sur une plaquette. Ces roulettes 3 sont montées sous le plancher 2 de la plateforme roulante 1. Typiquement une telle plateforme roulante 1 comporte généralement quatre roulettes 3 montées sous le plancher 2. Ces roulettes 3 servent de support pour le plancher 2, le plancher 2 venant en appui sur les roulettes 3.

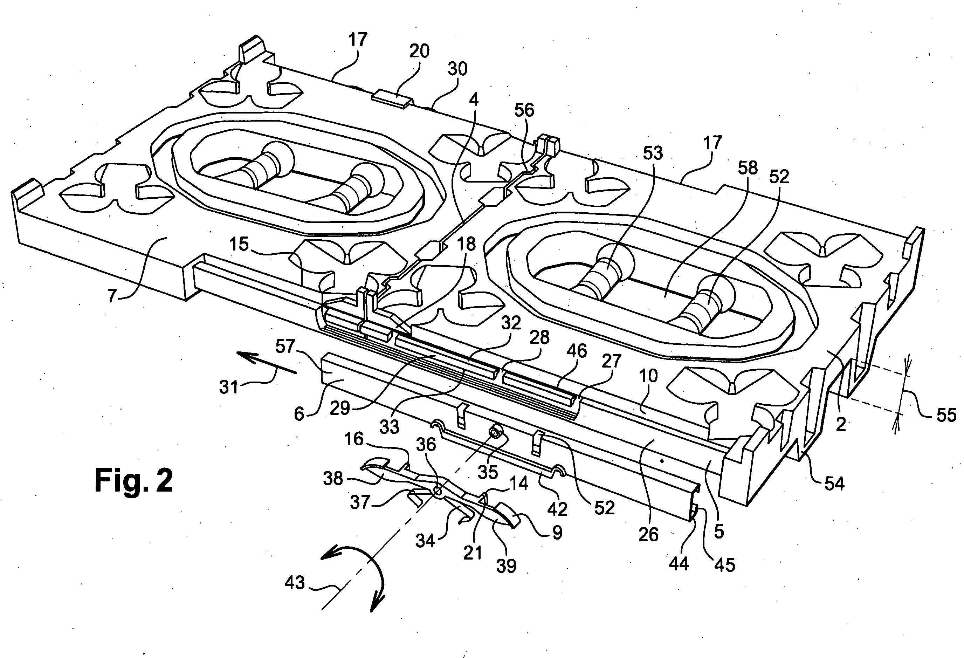

Afin de déplacer ensemble des plateformes roulantes 1, une deuxième plateforme roulante est généralement accolée à un coté 4 du plancher 2. Un chant 5 du plancher 2 contigü au chant 4 comporte à cet effet un mécanisme de connexion 6. Ce mécanisme de connexion 6 comporte une barre 57 et une pièce 9. La pièce 9, appelée moyen de connexion 9, est montée en rotation sur la barre 57. Ce mécanisme de connexion 6 coopère avec un deuxième plancher 7, figure 2, d'une deuxième plateforme roulante afin de maintenir ensemble les planchers 2 et 7. La barre 57 est montée coulissante dans le chant 5 latéral du plancher 2, et donc le mécanisme de connexion est coulissant dans ce même chant 5. Cependant, le mécanisme 6, si il doit servir à maintenir ensemble deux planchers 2 et 7, doit aussi, lorsqu'il n'est pas nécessaire de maintenir ainsi les planchers 2 et 7, pouvoir rester fixe sur le chant 5 du plancher 2. Ainsi la barre 57 est elle montée coulissante entre deux positions sur le chant 5 du plancher 2.

Une première position, appelée position d'accrochage, correspond à une position dans laquelle le mécanisme 6 sert à retenir ensemble le plancher 2 et le deuxième plancher 7. Typiquement, la position d'accrochage correspond à la position dans laquelle un utilisateur veut déplacer deux plateformes roulantes simultanément. La pièce 9 formant le moyen de connexion 9 coopère à la fois avec la barre 57, avec le chant 5 du plancher 2 et avec un chant 10 du deuxième plancher 7. Le chant 10 du deuxième plancher 7 est situé dans la continuité du chant 5 du plancher 2. Cette coopération sert à retenir ensemble le plancher 2 et le deuxième plancher 7 et maintenir ainsi le mécanisme 6 dans sa position d'accrochage 8. La coopération s'exerce par exemple sous la forme d'ergots ou de pions de la pièce 9 qui s'encastrent dans des reliefs, ou des cavités, des chants 5 et 10 et/ou de la barre 57.

Une deuxième position, appelée position de repos ou de rangement, correspond à une position dans laquelle le mécanisme 6 est fixe sur le plancher 2 mais ne retient pas le plancher 2 et le deuxième plancher 7 accrochées ensemble. Plus particulièrement, ici encore c'est de préférence le moyen de connexion 9 qui maintient le mécanisme 6 en positon de repos.

Selon l'invention, le moyen de connexion 9 est mobile en basculement par rapport à la barre 57, par exemple en rotation de 15° dans un quelconque des deux sens. La barre 57 et le moyen de connexion 9 sont à cet effet solidaires par un axe 11 en déplacement lors d'un coulissement le long du chant 5 du plancher 2. Selon l'inclinaison du moyen de connexion 9 par rapport à la barre 57, la barre 57 et le moyen de connexion 9 peuvent coulisser ou non le long du chant 5 du plancher 2.

Le coulissement de la barre 57 entraîne, par l'axe 11, le déplacement du moyen de connexion 9. Le moyen de connexion 9 peut prendre, selon sa position en coulissement, deux positions dans lesquelles il bloque la barre 57, et donc le mécanisme 6, en déplacement. Typiquement, dans une première position, le moyen de connexion 9 peut retenir le plancher 2 et le deuxième plancher 7 ensembles. Dans une deuxième position 13, le moyen de connexion 9 ne peut pas retenir le plancher 2 et le deuxième plancher 7 ensembles. Il est toutefois maintenu alors sur le plancher 2.

La figure 2 représente une vue de dessus en perspective d'une plateforme roulante selon le premier mode de réalisation de l'invention.

Le moyen de connexion 9 bloque en coulissement la barre 57 au moyen de pions 14 et 16. Ces pions 14 et 16 sont en vis-à-vis du chant 5 du plancher 2 sur lequel coulisse la barre 57 en position de repos. Ils sont protubérants en direction du chant 5. Ils sont partagés entre le chant 5 et le chant 10, en position d'accrochage. Le chant 10 comporte à cet effet, dans une nervure 29, une première encoche 15. La première encoche 15 est complémentaire d'un premier pion 16 du moyen de connexion 9. Dans la première position du moyen de connexion 9, le premier pion 16 est inséré dans la première encoche 15 en même-temps que le deuxième pion 14 est inséré dans une encoche 18 du chant 5.

En position de repos, les pions 14 et 16 sont insérés dans des encoches 28 et 27 respectivement de la nervure 29. La nervure 29 forme par son dessus et son dessous deux glissières, respectivement supérieure et inférieure, sur lesquelles peuvent glisser les pions 14 et 16, ou 16 et 14, avant de s'engager dans les encoche 15 et 18.

Typiquement le deuxième plancher 7 est identique au premier plancher 2. Ils sont toutefois présentés en retournement l'un contre l'autre pour s'accrocher l'un à l'autre. Par exemple, le plancher 2 comporte un mécanisme 6 sur un côté droit (pour une certaine orientation). Le plancher 7 comporte alors de même un mécanisme de connexion également du coté droit. En retournement, la barre du plancher 7 est dans l'alignement du côté gauche du plancher 2. De ce fait, le moyen de connexion 20 du deuxième plancher 7 comporte des pions introduits dans des encoches du premier et du deuxième plancher 2 et 7, dans des équivalents des encoches 15 et 18. Le maintien des deux côtés assure la rigidité de l'ensemble.

La complémentarité des pions et des encoches entraîne une butée des pions sur des bords des encoches lorsqu'un utilisateur essaie de déplacer le mécanisme 6 sans faire sortir les pions des encoches. Cette complémentarité provoque soit le maintien de du mécanisme en position de repos, soit le maintien du mécanisme en position d'accrochage. Lorsque les premier et deuxième pions sont introduits, respectivement dans la première encoche 15 et dans la deuxième encoche 18, alors le moyen de connexion 9 est dans la première position d'accrochage. Au besoin, les formes des encoches sont coniques pour faciliter l'introduction et augmenter l'effort de placage l'une contre l'autre. De préférence, les pions possèdent un profil en forme de banane pour s'engager par rotation dans les encoches.

Le couple des deux encoches 27 et 28 de repos peut être remplacé par une cavité. Cette cavité peut recevoir les deux pions 14 et 16 du moyen de connexion 9. Lorsque les pions 14 et 16 sont introduits dans la cavité, le moyen de connexion 9 est alors dans la deuxième position de repos. Dans cette deuxième position, le moyen de connexion 9 bloque le coulissement de la barre 57 le long du chant 5 par une butée des pions 16 et 21 sur des bords de la cavité.

Pour permettre le passage des pions à travers la barre 57, afin que les pions coopèrent avec les encoches ou bien avec la cavité réalisée sur les chants des planchers, la barre 57 comporte elle aussi des orifices 52 permettant le passage des pions. La réaction des pions entre les bords des orifices 52 permet le maintien des deux palettes ensemble. Les chants des orifices 52 exercent sur les pions des efforts de réaction au moment où les deux planchers sont sollicités pour s'écarter l'un de l'autre du fait des manutentions. Cette réaction à proximité permet de renforcer la raideur du maintien.

Afin de permettre le coulissement et le guidage de la barre 57 le long du chant 5 du plancher 2, le chant 5 du plancher 2 comporte aligné avec et parallèle à la nervure 29 un rail 26 de coulissement. Le chant 17 opposé au chant 10 comporte un rail 26 également. La présence d'un rail 26 de coulissement permet à la barre 57 située sur le chant 5 du plancher 2 de coulisser jusqu'à un rail 26 de coulissement du deuxième plancher 7 accolé. Une barre 30 située sur le deuxième plancher 7 coulisse aussi dans le rail 26 situé sur le chant 17 opposé au chant 5 du plancher 2 sur lequel coulisse la barre 57 du plancher 2. Ces deux rails contribuent, lorsque les deux barres sont en position d'accrochage, d'accouplement, de maintenir solidairement et solidement les deux plateformes roulantes, entre elles. Cette rigidité est alors telle qu'il est possible de saisir les deux plateformes roulantes ensembles avec un chariot élévateur, voire de faire basculer l'ensemble, par exemple sur les roues d'un seul chariot, pour alléger le poids sur les roues de l'autre chariot, et faire ainsi pivoter facilement l'ensemble lors des manutentions.

Avec l'invention, on obtient un couple de réaction au déversement de pile tel que l'ouverture entre deux piles, montées chacune sur un plancher, à leur sommet reste très voisin de l'écart entre les bases des piles. Typiquement, la variation d'écart des piles à deux mètres de hauteur, chargée chacune de 100 KG, est inférieure à 10 mm.

A cet égard, les planchers comportent des talons tels que 54 dont la hauteur 55 occupe presque la totalité de l'espace disponible entre le sommet du plancher et le sol. Les talons 54 sont placés dans des chants contigüs aux chants 5. Typiquement pour un plancher situé à 165 mm du sol, le bas du talon 54 est situé à 35 mm du sol. Les planchers comportent également des profils complémentaires tels que 56, de préférence légèrement en queue d'aronde pour permettre un engagement élastique, dans les chants perpendiculaires à un chant 10 muni de la barre. Ces profils en queue d'aronde sont toutefois chanfreinés à leur sommet pour permettre un guidage de mise en correspondance des plancher lors de leur accouplement.

Selon l'invention, la première encoche 15 et la deuxième encoche 18 sont allongés perpendiculairement à une direction 31 de coulissement de la barre 57. Typiquement, une des deux encoches débouche sur un sommet 32 de la nervure 29 présent dans le chant 5 alors que l'autre encoche débouche dans une base 33 de la nervure 29. Les troisième encoche 27 et quatrième encoche 28 sont réalisées selon le même schéma. Une des encoches débouchant sur le sommet 32 de la nervure 29 alors que l'autre encoche débouche sur la base 33 de la nervure 29. De préférence toutefois les deux encoches sont traversantes. De cette façon, les pions peuvent y être engagés par le haut ou le bas, d'un côté ou de l'autre.

Afin d'assurer le maintien de l'orientation du moyen de connexion 9 par rapport à la barre 57, le moyen de connexion 9 est maintenu dans la première ou la deuxième position par un moyen de rappel 34 élastique. Ce moyen de rappel 34 élastique évite à un utilisateur d'avoir à manipuler le moyen de connexion 9 lorsque celle-ci arrive en vis-à-vis des encoches que ce soit dans la première position ou dans la deuxième position. Le moyen de rappel 34 élastique force l'introduction des pions du moyen de connexion 9 dans les encoches. Le moyen 34 a la forme d'une lame élastique prenant appui par exemple sur la nervure 29, sur le rail 26, ou de préférence sur un retour de la barre 57 qui a un profil en U. Par ailleurs, le moyen de rappel 34 élastique empêche les pions du moyen de connexion 9 de sortir des encoches ou de la cavité 25 lorsque ces pions sont introduits dans les encoches ou la cavité. Ils n'en sortent que si l'utilisateur les sort lui-même.

Afin de permettre le basculement du moyen de connexion 9 par rapport à la barre 57, la barre 57 porte l'arbre 11. La barre 57 et le moyen de connexion 9 comportent alors un alésage 35 et 36 complémentaires de l'arbre 11. L'alésage 36 reçoit l'arbre 11 de la barre 57 afin de permettre le basculement, typiquement une rotation. Le moyen de rappel 34 élastique prend alors appui entre la barre 57 et le moyen de connexion 9. Cet appui assure le retour en première ou en deuxième position du moyen de connexion 9.

Dans un premier mode de réalisation, le moyen de appel 34 comporte une patte flexible 37. Le rôle de moyen de rappel 34 élastique est alors rempli par la patte flexible 37. Dans ce mode de réalisation, le moyen de connexion 9 à une forme générale de croix, une première branche 38 comporte le premier pion 16 et une deuxième branche 39 comporte le deuxième pion 14. Ces branches sont reliée autour de l'alésage 36. Une première patte flexible 34 et une deuxième patte flexible 37 s'étendent depuis l'alésage 36, en se développant suivant un même plan de développement que les branches 38 et 39. Le moyen de connexion 9 et le moyen de rappel élastique 34 sont alors formés de préférence en un même matériau, en une pièce monobloc, par exemple en plastique ou en métal.

La barre 57 comporte une plaque d'appui 42 ou pièce de protection servant à manipuler le moyen de connexion 9. La ou les pattes flexibles peuvent aussi prendre appui sur la plaque d'appui 42. Dans un mode de réalisation préférentiel de l'invention, un axe 43 de l'arbre 11 est perpendiculaire au chant 5 de 2.

Au repos du moyen de rappel élastique 34, c'est-à-dire quand la position relative du moyen de connexion 9 par rapport à la barre 57 bloque le coulissement de la barre 57, la première patte flexible 34 et la deuxième patte flexible 37 sont sensiblement au repos. Lorsque le moyen de connexion 9 bascule par rapport à la barre 57, le moyen de connexion 9 subit une rotation autour de l'axe 43 de l'arbre 11. Cette rotation entraîne une déformation d'une patte flexible 37 sur la plaque d'appui 42 ou sur la barre 57. Cet déformation entraîne la compression de la patte flexible 37. Par ailleurs, la rotation fait sortir en même temps le premier pion 16 et le deuxième pion 14 des encoches, ou de la cavité. Les pions n'étant plus dans les encoches, la barre 57, et donc le moyen de connexion 9 ainsi que le mécanisme de connexion 6, peuvent coulisser le long du chant 5 depuis la position de repos jusqu'à la position d'accrochage et inversement. Idéalement, les branches 38 et 39 de moyen de connexion 9 peuvent avoir une forme générale de pédale permettant à un utilisateur de forcer la rotation de moyen de connexion 9 à l'aide du pied.

Selon l'invention, la barre 57 comporte un profil en U avec une base et deux ailes telles que 44. Les deux ailes 44 sont chacune munies à leur extrémité libre d'une nervure 45 orientée vers l'intérieur du U. Les nervures 45 sont complémentaires de gorges 46 réalisées dans le rail 26 et ou la nervure 29 dont la glissière supérieure est alignée avec le sommet du rail 26. Les nervures 45 s'agrippent de manière élastique dans les gorges 46. La complémentarité des nervures 45 et des gorges 46 assure le guidage de la barre 57 lors du coulissement de la barre 57 le long du chant 5 de 2. Par ailleurs la forme de la barre 57 et du rail 26 permet de facilement installer, enlever ou remplacer une telle barre 6. Il est en effet possible d'introduire le mécanisme 6 par une extrémité du rail 26.

La figure 3 représente une vue en perspective schématique d'une plateforme à roulettes selon un deuxième mode de réalisation de l'invention.

Dans ce deuxième mode de réalisation, le moyen de connexion 9 est monté sur la barre 57 en rotation autour d'une direction 49 parallèle à la direction de coulissement 31. Dans un tel mode de réalisation, le premier pion 16 et le deuxième pion 14 sont des protubérances qui viennent s'enclencher dans des rainures telles que 48 réalisées dans le chant 5. Typiquement, le premier pion 16 et le deuxième pion 14 sont respectivement remplacés par une première protubérance 59 et une deuxième protubérance 50 articulées autour de l'axe 49. Les rainures 48 qui remplacent alors les encoches dans le chant 5 débouchent dans ce mode de réalisation du même coté du rail 26, c'est-à-dire que les rainures 48 débouchent toutes soit sur le sommet 32 du rail 26 soit sur la base 33 du rail 29. Elles peuvent néanmoins être aussi traversantes pour une raison de simplicité de fabrication.

Dans un mode préférentiel de réalisation de l'invention, le chant 5 du plancher 2 comporte une butée 51. Une telle butée limite le coulissement de la barre 57 en position de repos. Typiquement, la barre 57 butte contre la butée 51 lorsqu'un utilisateur essaie de faire dépasser à la barre 57 la position de repos. Une butée similaire existe d'un autre côté sur un autre plancher pour limiter le déplacement de la barre lors de la mise en place de l'accrochage. Ainsi lorsque l'utilisateur pousse avec le pied la barre 57, celle-ci ne peut dépasser l'une ou l'autre de ces positions de repos ou d'accrochage.

Les planchers selon l'invention sont ainsi tous identiques. Ils ne peuvent de ce fait être accrochés que deux par deux. Il est toutefois possible de prévoir une symétrie de réalisation pour que plus de deux planchers puissent être accrochées à la file.

Les planchers comportent des alvéoles 50 supérieures pour recevoir les roulettes d'une autre plateforme roulante lorsque de telles plateformes roulantes sont empilées. Ces planchers sont épais et sont formés par un voile avec des ondulations et un trou central 58. Ce trou 58 est traversé par deux poutres 52 et 53. Ces poutres 52 et 53 forment des poignées permettant un transport plus facile des plateforme à vide. Les ondulations comportent un anneau ondulé situé autour du trou 58.

## Revendications

1. - Plateforme roulante (1) comportant
- un plancher (2) de forme parallélépipédique,
- un jeu de roulettes (3) supportant le plancher,
- un mécanisme de connexion (6), le mécanisme comportant une barre (57) d'accrochage, coulissante dans un chant (5) latéral du plancher entre deux positions,
- une première position d'accrochage dans laquelle un moyen de connexion (9) du mécanisme sert à retenir ensemble le plancher à un plancher (7) d'une autre plateforme roulante mise en vis-à-vis, et joindre ainsi les deux plateformes roulantes, et une deuxième position de moyen de connexion dit position de repos dans laquelle le moyen de connexion maintient le mécanisme en position de repos et ne retenant pas les deux planchers entre eux,
- le moyen de connexion est mobile en basculement (11) par rapport à la barre, entre deux positions, une première position dans laquelle le moyen de connexion peut retenir les planchers ensemble et une deuxième position dans laquelle il ne peut pas retenir les planchers ensemble,
**caractérisée en ce que**
- la barre comporte un profil en U avec deux ailes, les deux ailes étant munies à leur extrémité libre d'une nervure pour s'agripper dans des gorges ménagées dans un rail du chant du plancher.

2. - Plateforme selon la revendication 1, **caractérisée en ce que**
- le moyen de connexion comporte deux pions (14, 16), et **en ce que**
- le chant du plancher sur lequel coulisse la barre comporte deux glissières, inférieures et supérieures, séparées par une nervure (29) pour recevoir les pions en coulissement,
une première encoche (18) réalisée dans la nervure pour recevoir un premier pion de moyen de connexion, pour la première position de ce moyen de connexion,
- un chant du plancher, opposé au chant sur lequel coulisse la barre, comporte une deuxième encoche (15) pour recevoir un deuxième pion d'un moyen de connexion d'un autre plancher identique, pour la première position de ce moyen de connexion de l'autre plancher.

3. - Plateforme selon la revendication 2, **caractérisée en ce que**
- le chant de plancher sur lequel coulisse la barre comporte une cavité (27, 28) ou un jeu d'encoches ou de trous pour recevoir les deux pions du moyen de connexion pour la deuxième position de moyen de connexion.

4. - Plateforme selon l'une des revendications 2 à 3, **caractérisée en ce que**
- les chants du plancher comportent chacun une nervure de coulissement,
- la première et la deuxième encoches sont allongées perpendiculairement à la direction de coulissement de la barre,
- une des deux encoches débouche sur le sommet de la nervure présente dans un chant alors que l'autre encoche débouche dans la base de la nervure présente dans l'autre chant.

5. - Plateforme selon l'une des revendications 2 à 4, **caractérisée en ce que**
- les encoches présentent un profil conique, et de préférence les pions ont une forme en banane.

6. - Plateforme selon l'une des revendications 1 à 5, **caractérisée en ce que**
- le plancher comporte un talon (54) abaissé dans un chant perpendiculaire à un chant muni de la barre.

7. - Plateforme roulante selon l'une des revendications 1 à 6,
**caractérisée en ce que**
- le moyen de connexion est maintenu dans la première ou la deuxième position par un moyen de rappel élastique (34).

8. - Plateforme roulante selon la revendication 7, **caractérisée en ce que** le moyen de rappel élastique comporte
- un arbre (11) porté par la barre (35), ou respectivement par le moyen (36) de connexion, et un alésage recevant l'arbre et porté par le moyen de connexion, ou respectivement par la barre, et
- un ressort prenant appui entre la barre et le moyen de connexion,
- de préférence le ressort étant formé par une patte flexible et le moyen de connexion et le ressort étant formés en une pièce monobloc,
- de préférence, un axe (43) de l'arbre étant perpendiculaire au chant de la palette.

9. **-** Plateforme roulante selon l'une des revendications **1** à **8, caractérisée en ce que** le moyen de connexion est montée en rotation, suivant un axe de rotation parallèle (49) à l'axe de guidage, sur la barre.

10. - Plateforme selon l'une des revendications **1** à **9 caractérisé en ce que** le chant du plancher comporte une butée limitant le déplacement latéral de la barre.

## Claims

1. A rolling platform (1), comprising
- a plane-parallel floor (2),
- a set of casters (3) supporting the floor,
- a connection mechanism (6), the mechanism comprising a coupling bar (57), sliding into a lateral edge (5) of the floor between two positions,
- a first coupling position in which a means of connecting (9) the mechanism is used to hold the floor to a floor (7) on another rolling platform opposite it, thus joining the two rolling platforms, and a second position means of connection, called resting position, in which the means of connection keeps the mechanism in resting position, without holding the two floors together,
- the means of connection is movable by switching (11) the bar between two positions: a first position in which the means of connection can hold the floors together and a second position in which it cannot hold the floors together,
**characterized in that**
- the bar is U-shaped with two extensions, the two extensions being fitted at their free end with a rib to hold it to corresponding grooves on a rail on the edge of the floor.

2. A platform according to claim 1, **characterized in that**
- the means of connection includes two pins (14; 16), and **in that**
- the edge of the floor on which the bar slides includes
two guides, an upper and a lower guide, separated by a rib (29) to accommodate the sliding pins,
a first recess (18) in the rib to accommodate a first means of connection pin, for the first position of this means of connection,
- an edge of the floor, opposite the edge on which the bar slides, includes a second recess (15) to accommodate a second means of connection pin from another matching floor, for the first position of this means of connection on the other floor.

3. A platform according to claim 2, **characterized in that**
- the edge of the floor on which the bar slides includes a cavity (27, 28) or a set of recesses or holes to accommodate both pins from the means of connection for the second position of the means of connection.

4. A platform according to any one of claims 2 to 3, **characterized in that**
- the edges of the floor each include a sliding rib,
- the first and second recesses are extended perpendicularly to the direction in which the bar slides,
- one of the recesses ends at the top of the rib on an edge while the other recess ends at the bottom of the rib on the other edge.

5. A platform according to any one of claims 2 to 4, **characterized in that**
- the recesses are cone-shaped, and the pins preferably are shaped like a banana.

6. A platform according to any one of claims 1 to 5, **characterized in that**
- the floor includes a heel (54) descending downward on an edge perpendicular to an edge with the bar.

7. A rolling platform according to any one of claims 1 to 6, **characterized in that**
- the means of connection is held in the first or second position by an elastic closing mechanism (34).

8. A rolling platform according to claim 7, **characterized in that** the elastic closing mechanism includes
- an arbor (11) held by the bar (35), or respectively by the means (36) of connection, and a bore accommodating the arbor and held by the means of connection, or respectively by the bar, and
- a spring supported by the bar and the means of connection,
- the spring preferably being made from a flexible lug and the means of connection and spring being made from a single piece,
- preferably, an axis (43) of the arbor being perpendicular to the edge of the platform.

9. A rolling platform according to any one of claims 1 to 8, **characterized in that that** means of connection is mounted such that it can be rotated on a parallel rotation axis (49) on the guide axis, on the bar.

10. A platform according to any one of claims 1 to 9, **characterized in that** the edge of the floor has a stop limiting the bar's lateral movement.

## Patentansprüche

1. - Rollplattform (1) mit
- einem Boden (2) in parallelepipedischer Form,
- einem Rollensatz (3), der den Boden trägt,
- einem Verbindungsmechanismus (6), wobei dieser Mechanismus eine Koppelleiste (57) enthält, die auf einer Seitenkante (5) des Bodens zwischen zwei Stellungen hin- und her gleitet,
- einer ersten Koppelstellung, in der eine Verbindungsvorrichtung (9) des Mechanismus dazu dient, den Boden der einen und einen Boden (7) einer anderen Rollplattform zusammen zu halten, die einander gegenüber gestellt werden, und die beiden Rollplattformen so zu verbinden, und einer zweiten Stellung der Verbindungsvorrichtung, die auch Ruhestellung genannt wird, und in der die Verbindungsvorrichtung den Mechanismus in Ruhestellung hält, ohne die beiden Böden zusammen zu halten,
- die Verbindungsvorrichtung ist im Verhältnis zur Leiste in zwei Stellungen schwenkbar (11), mit einer ersten Stellung, in der die Verbindungsvorrichtung die beiden Böden zusammen halten kann und einer zweiten Stellung, in der sie die beiden Böden nicht zusammen halten kann,
**dadurch gekennzeichnet, dass**
- die Leiste ein U-Profil mit zwei Flügeln aufweist, wobei die beiden Flügel an ihren freien Enden jeweils eine Rippe aufweisen, um damit in die Nuten einzugreifen, die in einer Schiene an der Bodenkante eingelassen sind.

2. - Rollplattform nach Anspruch 1, **dadurch gekennzeichnet, dass**
- die Verbindungsvorrichtung zwei Stifte (14, 16) enthält, und dadurch, dass
- die Bodenkante, über die die Leiste gleitet, folgendes enthält
- zwei Gleitschienen, eine untere und eine obere, die durch eine Rippe (29) getrennt sind, um die gleitenden Stifte aufzunehmen,
- eine erste Nut (18), die in die Rippe eingelassen ist, um einen ersten Stift der Verbindungsvorrichtung für die erste Stellung dieser Verbindungsvorrichtung aufzunehmen,
- eine Bodenkante, die jener gegenüber liegt, über die die Leiste gleitet, und die eine zweite Nut (15) enthält, um einen zweiten Stift einer Verbindungsvorrichtung eines anderen identischen Bodens aufzunehmen, für die erste Stellung dieser Verbindungsvorrichtung des anderen Bodens.

3. - Rollplattform nach Anspruch 2, **dadurch gekennzeichnet, dass**
- die Bodenkante, über die die Leiste gleitet, eine Vertiefung (27, 28) oder eine Reihe von Kerben oder Löcher enthält, um die beiden Stifte der Verbindungsvorrichtung für die zweite Stellung dieser Verbindungsvorrichtung einrasten zu lassen.

4. - Rollplattform nach einem der Ansprüche 2 bis 3, **dadurch gekennzeichnet, dass**
- jede der Bodenkanten eine Gleitrippe enthält,
- sich die erste und die zweite Kerbe normal zur Gleitrichtung der Leiste erstrecken,
- eine der beiden Kerben am Scheitelpunkt der Rippe an der Kante einmündet, währen die andere Kerbe an der Basis der Rippe an der anderen Kante einmündet.

5. - Rollplattform nach einem der Ansprüche 2 bis 4, **dadurch gekennzeichnet, dass**
- die Kerben ein konisches Profil, und die Stifte vorteilhaft eine Bananenform aufweisen.

6. - Rollplattform nach einem der Ansprüche 1 bis 5, **dadurch gekennzeichnet, dass**
- der Boden einen Ansatz (54) enthält, der in eine Kante eingelassen ist, die normal zur Kante mit der Leiste steht.

7. - Rollplattform nach einem der Ansprüche 1 bis 6, **dadurch gekennzeichnet, dass**
- die Verbindungsvorrichtung durch eine elastische Raste (34) in der ersten oder in der zweiten Stellung gehalten wird.

8. - Rollplattform nach Anspruch 7, **dadurch gekennzeichnet, dass** die elastische Raste folgendes enthält
- eine Welle (11), die von der Leiste (35) beziehungsweise von der Verbindungsvorrichtung (36) getragen wird, und eine Bohrung, in die die Welle eingeführt wird, und die in die Verbindungsvorrichtung beziehungsweise in die Leiste gearbeitet ist, und
- eine Feder, die zwischen der Leiste und der Verbindungsvorrichtung anliegt
- wobei die Feder vorteilhaft durch eine flexible Lasche und die Verbindungsvorrichtung gebildet wird, und die Feder in Form eines einzelnen Monoblocks ausgeführt ist,
- wobei die Wellenrichtung (43) vorteilhaft normal zur Palettenkante ausgerichtet ist.

9. - Rollplattform nach einem der Ansprüche 1 bis 8, **dadurch gekennzeichnet, dass** die Verbindungsvorrichtung entsprechend einer Rotationsachse (49) drehend angebracht ist, die parallel zur Führungsachse auf der Leiste verläuft.

10. - Rollplattform nach einem der Ansprüche 1 bis 9, **dadurch gekennzeichnet, dass** die Bodenkante einen Anschlag enthält, der die Seitenbewegung der Leiste begrenzt.
